# EUROPEAN PATENT SPECIFICATION

(11) **EP 3 163 549 B1**
(45) Date of publication and mention of the grant of the patent: **29.07.2020**
(21) Application number: 16166980.9
(22) Date of filing: 26.04.2016
(51) Int. Cl.: G08C 17/02

(54) **INTERFACE DISPLAY METHOD AND DEVICE**
SCHNITTSTELLENANZEIGEVERFAHREN UND VORRICHTUNG
PROCÉDÉ ET DISPOSITIF D'AFFICHAGE D'INTERFACE

(30) Priority: 30.10.2015 CN 201510729109
(43) Date of publication of application: 03.05.2017
(73) Proprietor: Xiaomi Inc., Beijing 100085 (CN)
(72) Inventor: REN, Qiao, 100085 BEIJING (CN); GAO, Sitai, 100085 BEIJING (CN); HOU, Enxing, 100085 BEIJING (CN)
(74) Representative: Cabinet Beau de Loménie

(56) References cited:
- WO-A2-03/083801
- US-A1- 2015 067 528

## Description

### TECHNICAL FIELD

The present invention generally relates to field of communication, and more particularly, to an interface display method and device.

### BACKGROUND

In the related art, through a terminal, a user may view control interfaces of other smart apparatuses bound with the terminal. However, each control interface displayed on the terminal is dedicated to control of one corresponding smart apparatus, whereas the user may have, bound to his terminal, several smart apparatuses that he may wish to control. The interface display method of the related art is not flexible.

Further, it is known from WO03/083801 to provide a remote control device having operation keys and to enable a user to assign to each key a respective control code to control a function of a respective controllable device (such that the single remote control may be used to control different devices by pressing different operation keys). Moreover, the Harmony One remote control produced by Logitech allows routine activities to be pre-programmed and, when the user presses a button on the remote control to select a given activity (e.g. "watch TV"), the remote control automatically performs functions (e.g. switches on/off, selects ports) on plural devices required for performance of the activity.

### SUMMARY

In view of this, the present invention provides an interface display method and device for solving the problem in the related art that the interface display is inflexible since the control interface displayed on the terminal at a given time only can be used to control one corresponding smart apparatus.

According to a first aspect of embodiments of the present invention, there is provided an interface display method applied in a terminal, including:
detecting an instruction that is input by a user;
detecting that the instruction input by the user is a control interface combination instruction instructing generation of a combined control interface for controlling a plurality of target smart apparatuses, the identities of the target smart apparatuses being carried by the control interface combination instruction;
determining the plurality of target smart apparatuses identified in the control interface combination instruction;
responsive to the control interface combination instruction input by the user, acquiring control interface information of the plurality of target smart apparatuses respectively, wherein the control interface information comprises all button control information on control interfaces corresponding to the plurality of target smart apparatuses;
generating a combined control interface according to the control interface information of the plurality of target smart apparatuses, the combined control interface being configured to control the plurality of target smart apparatuses; and
displaying the combined control interface.

Alternatively, before determining the plurality of target smart apparatuses designated by the control interface combination instruction when the control interface combination instruction inputted by the user is detected, the method further includes:
outputting an apparatus list of different smart apparatuses which have been bound with the terminal in advance; and
when a selection operation of a predetermined key is detected, using the selection operation of the predetermined key as the control interface combination instruction, the predetermined key being a key for a plurality of target smart apparatuses selected by the user from the apparatus list.

The acquiring of the control interface information of the plurality of target smart apparatuses respectively may include:
sending a control interface information acquiring request to a preset server, the control interface information acquiring request carrying apparatus identities of the plurality of target smart apparatuses, such that the server acquires the control interface information of the plurality of target smart apparatuses respectively according to the apparatus identities after receiving the control interface information acquiring request; and
receiving the control interface information of the plurality of target smart apparatuses returned by the preset server. The control interface information may include all button control information and demonstration control information on control interfaces corresponding to the plurality of target smart apparatuses. For example, in relation to button control information, in a case where the target smart apparatuses are intelligent air conditioning devices the control interface may include control buttons to turn on the air conditioner, adjust the temperature, etc., and for an intelligent television control interface, there may be a control button to turn on the television, switch channels, etc. For example, demonstration of control information may correspond to a control button to control a corresponding display screen. For example, in relation to a control button to turn on a smart television, the presentation of control information may demonstrate a picture on the television.

The generating of the combined control interface according to the control interface information of the plurality of target smart apparatuses includes :
determining, from the acquired control interface information of the plurality of target smart apparatuses, controls that the target smart apparatuses have in common, and defining button control information of said common controls as target control interface information of the combined control interface;
generating, for a control common to said plurality target smart apparatuses, a combined control button in the combined control interface according to said button control information in the target control interface information.

After displaying the combined control interface, the method further includes:
when detecting that the combined control button is selected, generating an operation instruction corresponding to the combined control button; and
sending the operation instruction to a preset server, such that the preset server forwards the operation instruction to the plurality of target smart apparatuses to make the plurality of target smart apparatuses perform a corresponding operation according to the operation instruction.

After displaying the combined control interface, the method may further include:
when an input operation is detected, modifying an interface name of the combined control interface according to content of the input operation.

According to a second aspect of embodiments of the present invention, there is provided an interface display method applied in a terminal, including:
an apparatus determining module configured to, when detecting a control interface combination instruction inputted by a user, determine a plurality of target smart apparatuses designated by the control interface combination instruction;
an acquiring module configured, responsive to the control interface combination instruction input by the user, to respectively acquire control interface information of the plurality of target smart apparatuses determined by the apparatus determining module, the control interface information comprising all button control information on control interfaces corresponding to the plurality of target smart apparatuses;
an interface generating module configured to generate a combined control interface according to the control interface information of the plurality of target smart apparatuses acquired by the acquiring module, the combined control interface being configured to control the plurality of target smart apparatuses; and
a displaying module configured to display the combined control interface.

The device may further include:
an output module configured to output an apparatus list of different smart apparatuses which have been bound with the terminal in advance; and
an instruction determination module configured to, when a selection operation of a predetermined key is detected, using the selection operation of the predetermined key as the control interface combination instruction, the predetermined key being a key for a plurality of target smart apparatuses selected by the user from the apparatus list outputted from the output module.

The acquiring module may include:
a sending submodule configured to send a control interface information acquiring request to a preset server, the control interface information acquiring request designating apparatus identities of the plurality of target smart apparatuses determined by the apparatus determining module, thereby the server acquires the control interface information of the plurality of target smart apparatuses respectively according to the apparatus identities after receiving the control interface information acquiring request; and
a receiving submodule configured to receive the control interface information of the plurality of target smart apparatuses returned by the preset server.

The interface generating module includes:
a determining submodule configured to determine, from the acquired control interface information of the plurality of target smart apparatuses acquired by the acquiring module, controls that the target smart apparatuses have in common, and to define button control information of said common controls as target control interface information of the combined control interface;
a first generating submodule configured to generate, for a control common to said plurality of target smart apparatuses, a combined control button in the combined control interface according to said button control information in the target control interface information determined by the determining submodule.

The device further includes:
an instruction generating module configured to, when detecting that the combined control button generated by the first generating submodule is selected, generate an operation instruction corresponding to the combined control button; and
a sending module configured to send the operation instruction generated by the instruction generating module to a preset server, such that the preset server forwards the operation instruction to the plurality of target smart apparatuses to make the plurality of target smart apparatuses perform a corresponding operation according to the operation instruction.

The device may further include:
a modification module configured to, when an input operation is detected, modify an interface name of the combined control interface displayed by the displaying module according to content of the input operation.

According to a third aspect of embodiments of the present invention, there is provided an interface display device applied in a terminal, including:
a processor; and
a memory for storing instructions executable by the processor;
wherein the processor is configured, when executed by the processor, to implement the above method

The technical solutions provided by embodiments of the present invention may have the following beneficial effects.

In the embodiments of the present invention, when detecting a control interface combination instruction carrying a plurality of target smart apparatuses inputted by a user, the terminal acquires control interface information of the plurality of target smart apparatuses respectively. Further, a combined control interface may be generated and displayed according to the control interface information of the plurality of target smart apparatuses. Through the above process, the combined control interface for controlling the plurality of target smart apparatuses may be displayed on the terminal, thereby improving the flexibility of interface display, and improving the user experience.

In the embodiments of the present invention, the terminal may output an apparatus list of different smart apparatuses, and when detecting that the user selects a preset key, the terminal determines that the control interface combination instruction inputted by the user is received, wherein the preset key is a key with respect to a plurality of target smart apparatuses selected by the user from the apparatus list. Further, the terminal may display the combined control interface capable of controlling the plurality of target smart apparatuses according to the control interface combination instruction, thereby improving the flexibility of interface display, and improving the user experience.

In the embodiments of the present invention, when detecting a control interface combination instruction inputted by the user, the terminal acquires control interface information of the plurality of target smart apparatuses respectively. The control interface information may include all button control information and demonstration control information on control interfaces corresponding to the plurality of target smart apparatuses. Further, the terminal determines target control interface information of the combination control interface according to the acquired control interface information, and generates a combined control button and a combination demonstration control on the combined control interface correspondingly according to the target control interface information. Through the above process, the combined control interface capable of controlling the plurality of target smart apparatuses is displayed on the terminal, thereby improving the flexibility of interface display.

In the embodiments of the present invention, the user may select a combined control key displayed on the combined control interface, so as to synchronously control the plurality of target smart apparatuses to perform an operation corresponding to the combined control button, thereby the user experience is good.

In the embodiments of the present invention, after displaying the combined control interface on the terminal, the user may customize an interface name of the combined control interface, which further improves the flexibility of interface display, and improves the user experience.

The present invention also provides a computer program, which when executing on a processor of a terminal, performs the above method.

It is to be understood that both the foregoing general description and the following detailed description are illustrative and explanatory only and are not restrictive of the invention as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of an interface display method, according to an example embodiment of the present invention;
Fig. 2 is a flow chart of another interface display method, according to an example embodiment of the present invention;
Fig. 3 is a flow chart of further another interface display method, according to an example embodiment of the present invention;
Fig. 4 is a flow chart of still another interface display method, according to an example embodiment of the present invention;
Fig. 5 is a flow chart of still further another interface display method, according to an example embodiment of the present invention;
Fig. 6 is a flow chart of still further another interface display method, according to an example embodiment of the present invention;
Fig. 7 is a flow chart of still further another interface display method, according to an example embodiment of the present invention;
Figs. 8A-8D are schematic diagrams illustrating scenarios during various interface display procedures according to an example embodiment of the present invention;
Fig. 9 is a block diagram of an interface display device according to an example embodiment of the present invention;
Fig. 10 is a block diagram of another interface display device according to an example embodiment of the present invention;
Fig. 11 is a block diagram of further another interface display device according to an example embodiment of the present invention;
Fig. 12 is a block diagram of still another interface display device according to an example embodiment of the present invention;
Fig. 13 is a block diagram of still further another interface display device according to an example embodiment of the present invention;
Fig. 14 is a block diagram of still further another interface display device according to an example embodiment of the present invention; and
Fig. 15 is a structural block diagram of a device for displaying an interface according to an example embodiment of the present invention.

### DETAILED DESCRIPTION

Reference will now be made in detail to certain embodiments, examples of which are illustrated in the accompanying drawings. The following description refers to the accompanying drawings in which the same numbers in different drawings represent the same or similar elements unless otherwise represented. The implementations set forth in the following description of certain embodiments do not represent all implementations consistent with the invention. Instead, they are merely examples of apparatuses and methods consistent with aspects related to the invention as recited in the appended claims.

The terms used in the present disclosure only tend to depict specific embodiments, rather than restricting the present invention. Except where the context indicates the contrary, the singular forms "a", "an", and "the" used in the present invention and accompanying claims are intended to include the plural forms. It should also be appreciated that the expression "and/or" used herein indicates including any and all possible combinations of one or more of the associated listed items.

It should be understood, although terms first, second, third and the like are used in the present invention to designate various elements, such elements are not restricted by these terms. These terms are only used to distinguish elements of the same type from each other. For example, without departing from the scope of the present invention, the first element may also be referred to as the element information. Similarly, the second element may also be referred to as the first element. Depending on context, the word "if" used herein may be read as "when" or "upon" or "in response to determination that..."

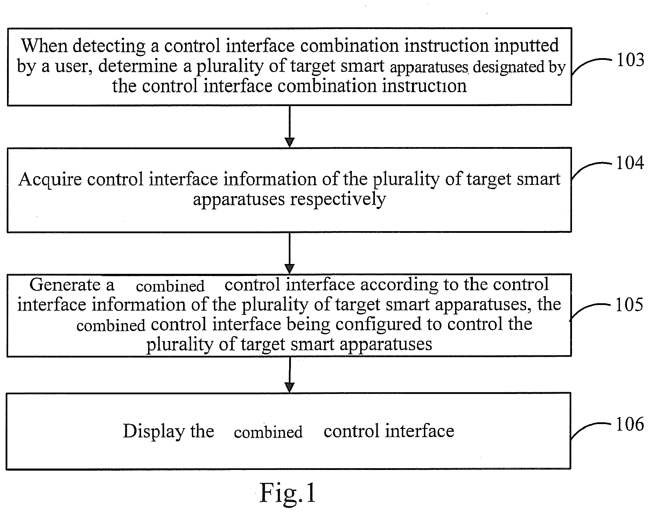

Fig. 1 is a flow chart of an interface display method, according to an embodiment. As shown in Fig. 1, the method may be applied in a terminal, and includes the following steps.

In step S101, when detecting a control interface combination instruction inputted by a user, a plurality of target smart apparatuses designated by the control interface combination instruction are determined.

The terminal involved in the embodiments of the present invention may be any of various smart terminals which could be carried by a user, e.g. a smart phone, a tablet, a Personal Digital Assistant (PDA), etc. The involved smart apparatus may be any of various smart electronic apparatuses in a smart home, e.g. a smart air conditioner, a smart air purifier, a smart curtain controller, a smart rice cooker, a smart water heater, a smart refrigerator, and so on.

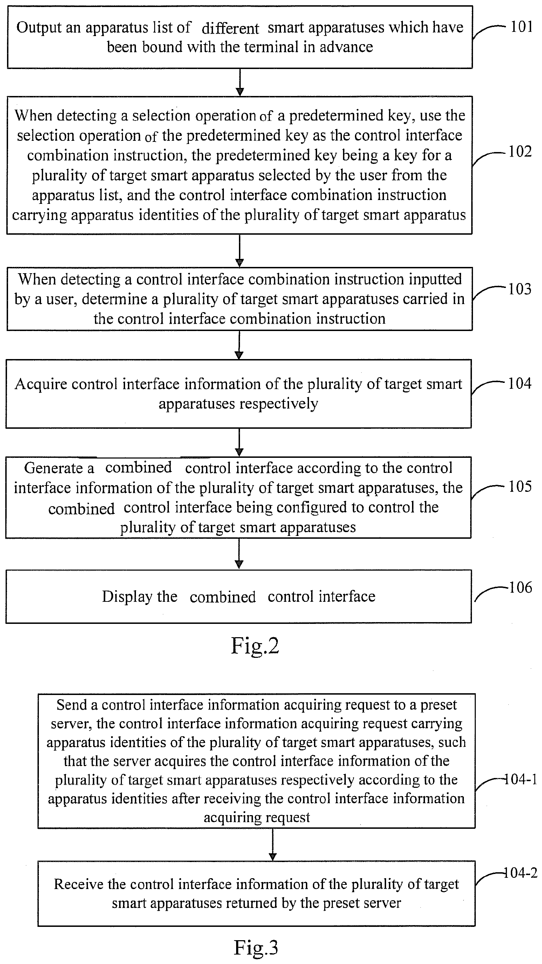

Fig. 2 is a flow chart of another interface display method, according to an embodiment of the present invention. Alternatively, as shown in Fig. 2, before performing step 103, the method may further include the following steps.

In step 101, an apparatus list of different smart apparatuses which have been bound with the terminal in advance is outputted.

In this step, the outputting may take any convenient form, for example, the terminal may output the apparatus list by displaying the list on a display screen of the terminal. The apparatus list may contain all the different smart apparatuses which have been bound with the terminal in advance.

Alternatively, the user of the terminal may utilize a terminal identity (such as a mobile phone number) of the terminal to login to a smart home application (APP) which has been installed in the terminal in advance. Different smart apparatuses have been bound with an account of the smart home APP in advance. When the user logs in to the smart home APP, the smart home APP may acquire apparatus identities of the relevant smart apparatuses from a preset server, according to the account, in any convenient manner (e.g. over a wired or wireless connection). Then the smart home APP outputs the apparatus list of the different smart apparatuses in a manner which identifies each apparatus (e.g. by listing apparatus identities).

In step 102, when detecting a selection operation of a predetermined key, the selection operation of the predetermined key is used as the control interface combination instruction, the predetermined key being a key for a plurality of target smart apparatuses selected by the user from the apparatus list, and the control interface combination instruction designates apparatus identities of the plurality of target smart apparatuses.

In this step, the terminal may display a preset virtual key, and when the terminal detects a selection operation of the preset key (e.g. by operation of a mouse, touch screen, etc.), the selection operation is determined to be a control interface combination instruction, i.e., the user selects to display the combined control interface. Since the preset key is a key with respect to multiple target smart apparatuses selected by the user in the apparatus list, the generated control interface combination instruction carries the apparatus identities of the multiple target smart apparatuses.

In the embodiments of the present invention, when the terminal detects the above selection operation, i.e., detects that the user inputs the control interface combination instruction, step 103 is performed so as to determine the apparatus identities of the plurality of target smart apparatuses designated by the control interface combination instruction according to the relevant art.

In step 104, control interface information of the plurality of target smart apparatuses are acquired respectively.

Fig. 3 is a flow chart of an example implementation of step 104 in an interface display method according to an embodiment of the present invention. As shown in Fig. 3, step 104 may include the following steps.

In step 104-1, a control interface information acquiring request is sent to a preset server, the control interface information acquiring request carrying apparatus identities of the plurality of target smart apparatuses, in this way, the preset server acquires the control interface information of the plurality of target smart apparatuses respectively, according to the apparatus identities, after receiving the control interface information acquiring request.

In this step, after determining the apparatus identities of the plurality of target smart apparatuses carried in the control interface combination instruction, the terminal sends the control interface information acquiring request to a preset server, wherein the control interface information acquiring request carries the apparatus identities.

After receiving the control interface information acquiring request, the preset server respectively acquires individual control interface information of the plurality of target smart apparatuses according to the apparatus identities. The control interface information may include all button control information and demonstration control information on control interfaces corresponding to the plurality of target smart apparatuses.

In step 104-2, the control interface information of the plurality of target smart apparatuses returned by the preset server is received.

In this step, the terminal may receive the control interface information sent by the preset server by any convenient technique (e.g. via a wired or wireless connection).

In step 105, a combined control interface is generated according to the control interface information of the plurality of target smart apparatuses, the combined control interface being configured to control the plurality of target smart apparatuses.

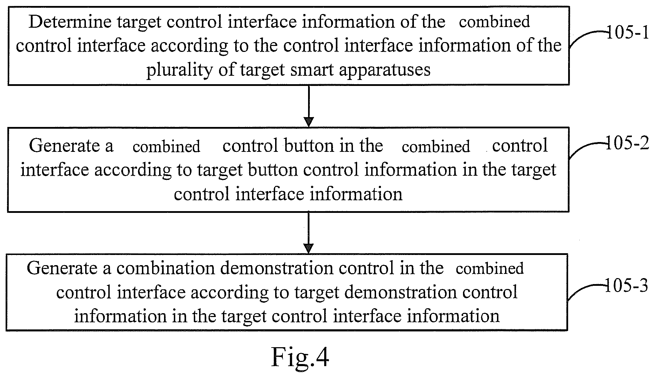

In certain embodiments of the present invention the step 105 may include the following steps, as illustrated in Fig.4.

In step 105-1, target control interface information of the combined control interface is determined according to the control interface information of the plurality of target smart apparatuses.

In this step, the terminal may determine the target control interface information which needs to be displayed in the combined control interface, according to the acquired control interface information of the plurality of target smart apparatuses.

In the embodiments of the present invention, considering that the user may need to synchronously operate the plurality of target smart apparatuses via the combined control button on the combined control interface, the target control interface information may be control interface information that is common to the plurality of target smart apparatuses.

For example, the plurality of the target smart apparatuses may include a smart apparatus A and a smart apparatus B, wherein control interface information corresponding to the smart apparatus A includes button control information a, button control information b, demonstration control information c, and demonstration control information d; and control interface information corresponding to the smart apparatus B includes button control information a, button control information b, demonstration control information e, and demonstration control information d. The method may determine that the control interfaces of the smart apparatus A and smart apparatus B have the following controls in common: button control information a, button control information b, and demonstration control information d. Thus, the finally determined target control interface information includes the button control information a, the button control information b, and the demonstration control information d.

In the embodiments of the present invention, the plurality of target smart apparatuses may all be the same type of smart apparatus, for example, they may all be smart curtain controllers, or smart air conditioners. Correspondingly, the target control interface information is the control interface information of one of the target smart apparatuses.

In step 105-2, a combined control button in the combined control interface is generated according to target button control information in the target control interface information.

In step 105-3, a combination demonstration control in the combined control interface is generated according to target demonstration control information in the target control interface information.

In the embodiments of the present invention, the terminal may respectively generate the combined control button and the combination demonstration control in the combined control interface according to the target button control information and the target demonstration control information in the target control interface information using any convenient technique, e.g. using techniques known in relevant art.

In step 106, the combined control interface is displayed.

In this step, the terminal displays the combined control interface generated by the above step 105.

Typically, the combined control interface includes names of the plurality of target smart apparatuses, such that the user may know which target smart apparatuses could be synchronously controlled by the current combined control interface.

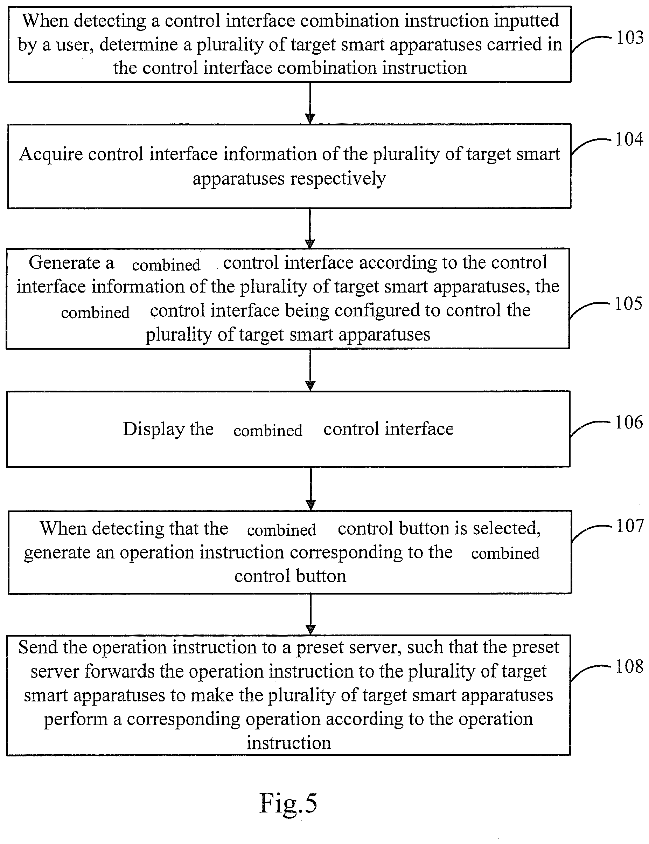

In the embodiments of the present invention, after completion of the above step 106, as shown in Fig. 5 which illustrates another interface display method according to an embodiment, the method may further include the following steps.

In step 107, when detecting that a combined control button is selected, an operation instruction corresponding to the combined control button is generated.

In this step, the terminal detects whether the user selects a combined control button on the combined control interface, and if the user selects the combined control button, then a corresponding operation instruction is generated.

In step 108, the operation instruction is sent to a preset server, such that the preset server forwards the operation instruction to the plurality of target smart apparatuses to make the plurality of target smart apparatuses perform a corresponding operation according to the operation instruction.

In this step, after generating the operation instruction, the terminal sends it to the preset server, and then the preset server forwards it to the plurality of target smart apparatuses respectively. After receiving the operation instruction, each of the target smart apparatuses may perform a corresponding operation.

For example, the plurality of target smart apparatuses may include a smart air conditioner and a smart air purifier, in this case, after the user selects a turn-on button, the terminal generates a turn-on operation instruction and sends it to a preset server, then the present server forwards it to the smart air conditioner and the smart air purifier, and then both the smart air conditioner and the smart air purifier perform the turn-on operation after receiving the turn-on operation instruction.

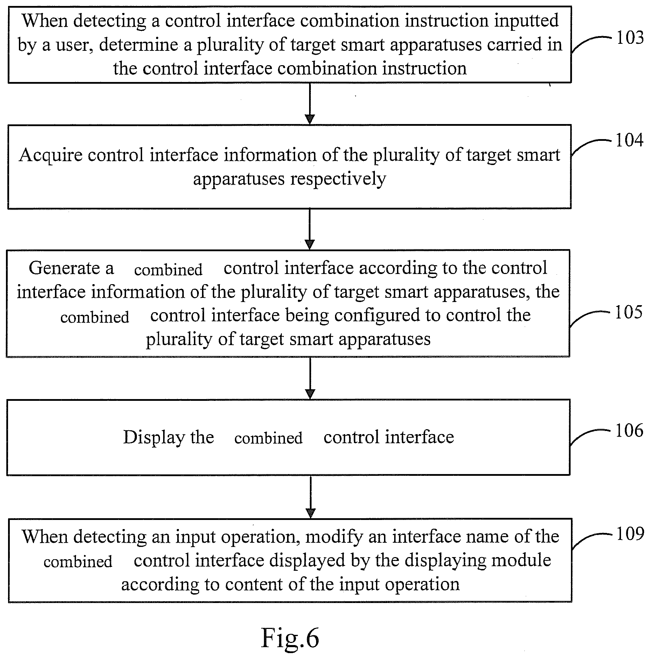

Alternatively, in the embodiments of the present invention, in order to further improve the flexibility of interface display, as shown in Fig. 6 which illustrates another interface display method according to an embodiment, after completion of the above step 106, the method may further include the following steps.

In step 109, when detecting an input operation, an interface name of the combined control interface is modified according to content of the input operation.

In this step, the terminal may detect whether there is an input operation, and if an input operation is detected, then the terminal may modify the interface name of the display interface according to the content of the input operation.

For example, the interface name may be "Two-in-one interface" originally, and the user may modify the interface name into "Room temperature controlling and adjusting interface" through an input operation.

The above-mentioned procedure may be completed by the smart home APP which has been installed in the terminal in advance. After the user logs in to the smart home APP by using the terminal identity of the terminal, the smart home APP will output an apparatus list of different smart apparatuses which have been bound with the smart home APP account in advance, and output (e.g. display) a preset key at the same time. After the user selects a plurality of target smart apparatuses from the apparatus list, the preset key is selected, the smart home APP will automatically acquire the control interface information of the plurality of target smart apparatuses, and then determine the target control interface information. The smart home APP generates and displays a combined control interface according to the target control interface information. Further, the user may select a combined control button on the combined control interface, so as to control the plurality of target smart apparatuses to perform corresponding operations.

In the above embodiments, a combined control interface for controlling the plurality of target smart apparatuses may be displayed on the terminal, and the user may select the combined control key displayed on the combined control interface, so as to synchronously control the plurality of target smart apparatuses to perform the operations corresponding to the combined control button, which improves the flexibility of interface display, and improves the user experience. Additionally, the above method may be applied in the smart home APP, thereby the availability is high.

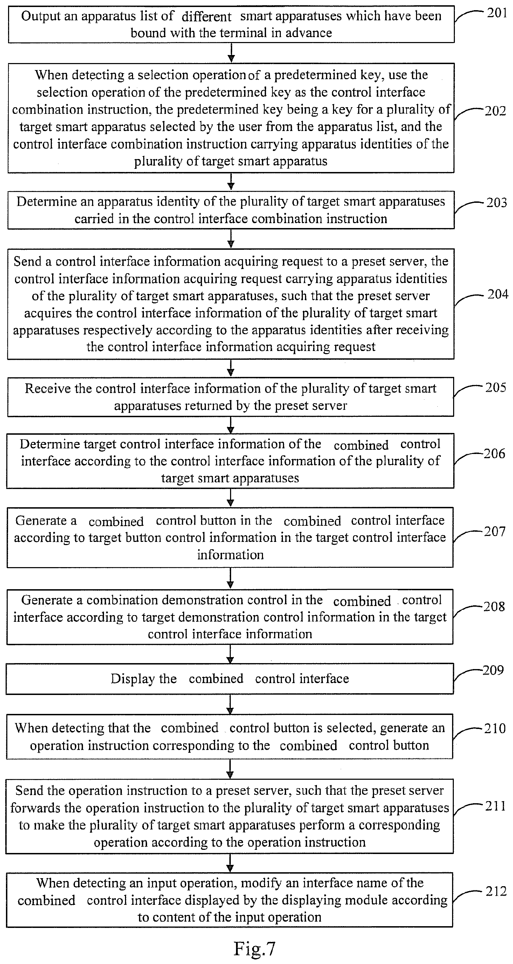

Fig. 7 illustrates another interface display method according to an embodiment. As shown in Fig. 7, the method includes the following steps.

In step 201, an apparatus list of different smart apparatuses which have been bound with the terminal in advance is outputted.

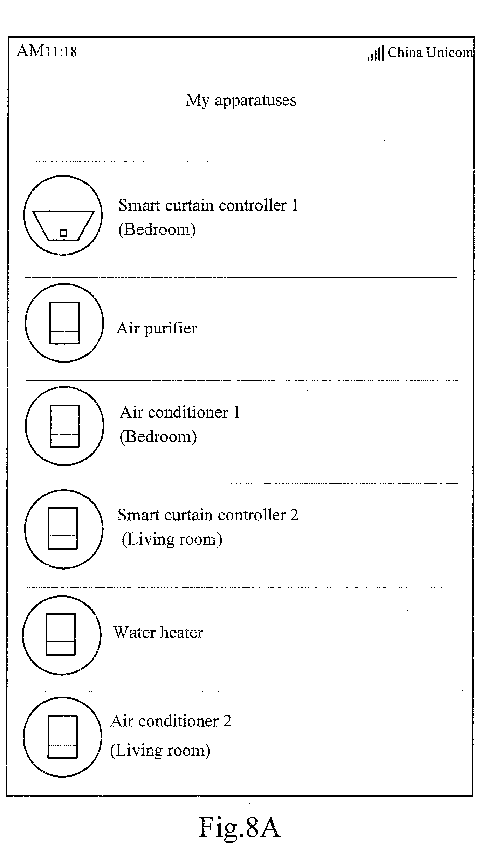

In this step, the terminal may output the apparatus list of smart apparatuses (which have been bound with the terminal in advance according to any convenient technique, e.g. a technique known in the relevant art), as shown in Fig. 8A.

In step 202, when detecting an operation selecting a predetermined key, the selection operation of the predetermined key is used as the control interface combination instruction, the predetermined key being a key for a plurality of target smart apparatuses selected by the user from the apparatus list, and the control interface combination instruction designating apparatus identities of the plurality of target smart apparatuses.

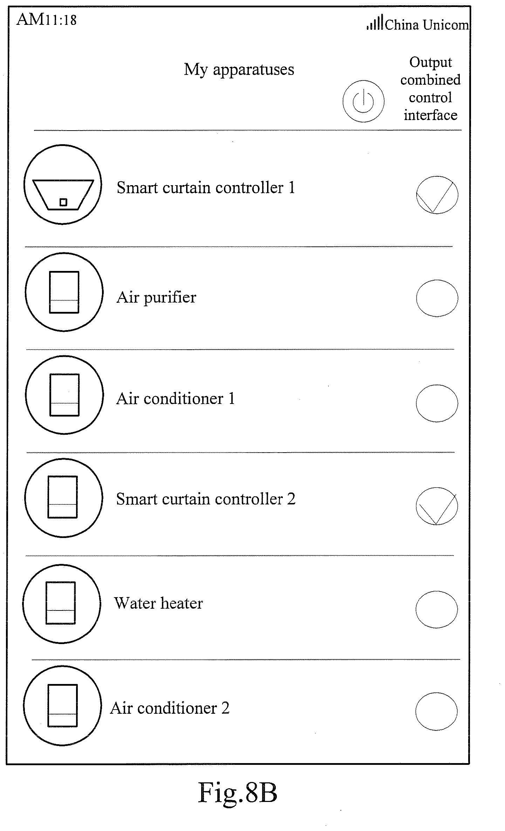

In this step, the user may select the plurality of target smart apparatuses from the apparatus list, and then select a preset virtual key 10, as shown in Fig. 8B. The terminal determines the selection operation of selecting the preset key by the user as generating the control interface combination instruction, and the control interface combination instruction may carry apparatus identities of the plurality of target smart apparatuses.

In step 203, the apparatus identities of the plurality of target smart apparatuses designated by the control interface combination instruction are determined.

In step 204, a control interface information acquiring request is sent to a preset server, the control interface information acquiring request carrying apparatus identities of the plurality of target smart apparatuses, thereby the preset server acquires the control interface information of the plurality of target smart apparatuses respectively according to the apparatus identities after receiving the control interface information acquiring request.

In this step, the terminal sends the control interface information acquiring request carrying apparatus identities to the preset server. The preset server acquires respective control interface information of the plurality of target smart apparatuses according to the apparatus identities. Alternatively, the control interface information includes all button control information and demonstration control information on control interfaces corresponding to the plurality of target smart apparatuses.

In step 205, the control interface information of the plurality of target smart apparatuses returned by the preset server is received.

In step 206, target control interface information of the combined control interface is determined according to the control interface information of the plurality of target smart apparatuses.

Alternatively, the target control interface information may be the control interface information common to the plurality of the target smart apparatuses.

In the example shown in Fig. 8B, the user selects two of the same smart apparatuses, i.e., smart curtain controllers, for respectively controlling curtains in the bedroom and in the living room. In this case, the target control interface information is the control interface information of one of the smart curtain controllers.

In step 207, a combined control button in the combined control interface is generated according to target button control information in the target control interface information.

In step 208, a combination demonstration control in the combined control interface is generated according to target demonstration control information in the target control interface information.

The above step 207 and step 208 may be performed synchronously. The terminal may respectively generate the combined control button and the combination demonstration control in the combined control interface according to the target button control information and the target demonstration control information in the target control interface information on the basis of the relevant art.

In step 209, the combined control interface is displayed.

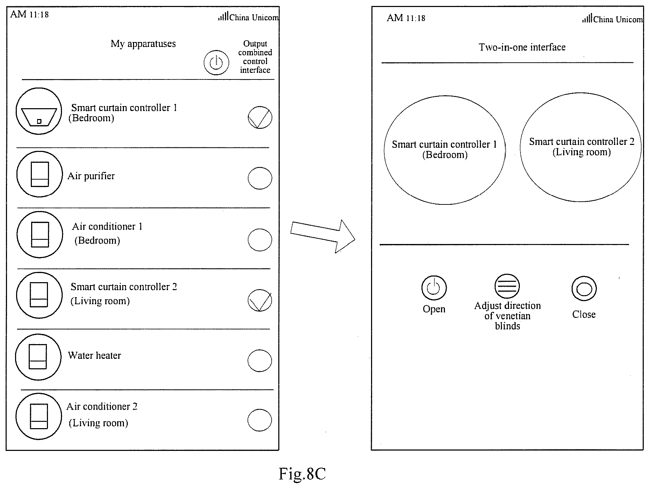

The displayed combined control interface is as shown in Fig. 8C.

In step 210, when detecting that a combined control button is selected, an operation instruction corresponding to the combined control button is generated.

In this step, the terminal detects whether the user selects a combined control button on the combined control interface, and if the user selects the combined control button, then a corresponding operation instruction is generated according to the relevant art. For example, if the user selects an "open" button in the combined control interface shown in Fig. 8C, the terminal generates an open operation instruction.

In step 211, the operation instruction is sent to a preset server, such that the preset server forwards the operation instruction to the plurality of target smart apparatuses to make the plurality of target smart apparatuses perform a corresponding operation according to the operation instruction.

In this step, the preset server sends the operation instruction sent by the terminal to the plurality of target smart apparatuses. For example, the preset server forwards the open operation instruction to two smart curtain controllers in Fig. 8C. The above two smart curtain controllers open curtains in the bedroom and the living room when receiving the open operation instruction.

In step 212, when detecting an input operation, an interface name of the combined control interface is modified according to content of the input operation.

In this step, the terminal may modify the interface name of the display interface according to the content of the input operation on the basis of the relevant art.

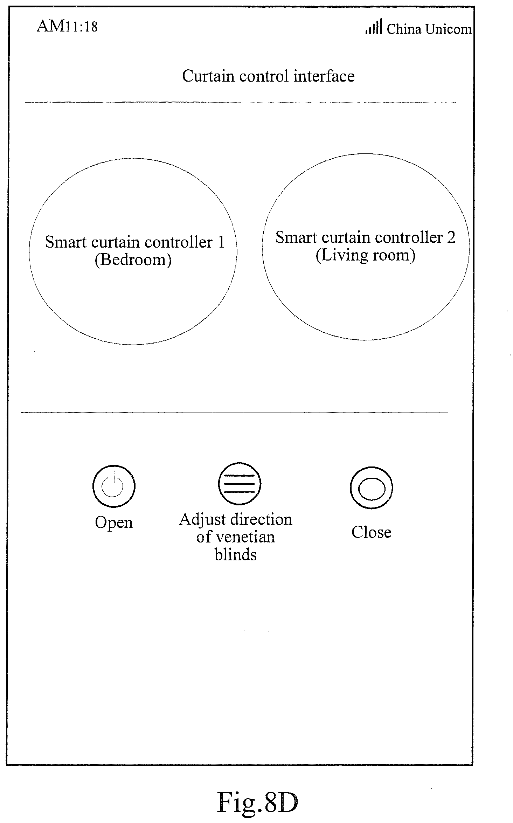

For example, the interface name may be "Two-in-one interface" originally, and the user may modify the interface name into "Curtain controlling interface" through an input operation, as shown in Fig. 8D.

In the above embodiments, the terminal may output an apparatus list of different smart apparatuses, and when detecting that the user selects a preset key, it is determined that a control interface combination instruction inputted by the user is received. Then, a combined control interface being capable of controlling the plurality of target smart apparatuses may be displayed according to the control interface combination instruction, which improves the flexibility of interface display. The user may select a combined control key displayed on the combined control interface, so as to synchronously control the plurality of target smart apparatuses to perform the operation corresponding to the combined control button, in this way, the user experience is good.

Corresponding to the above-mentioned method embodiments, the present invention also provides device embodiments.

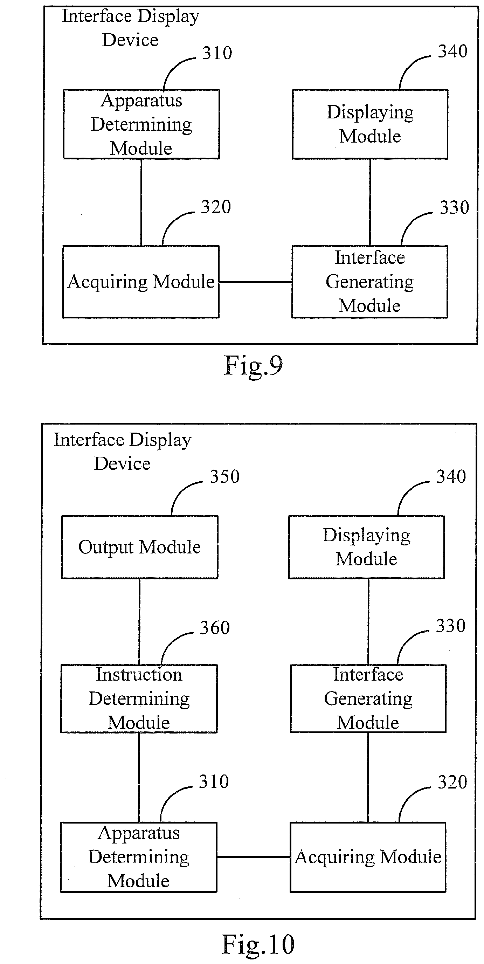

Fig. 9 is a block diagram of an interface display device according to an embodiment of the present invention. As shown in Fig. 9, the interface display device is applied in a terminal, and includes: an apparatus determining module 310, an acquiring module 320, an interface generating module 330, and a displaying module 340.

The apparatus determining module 310 is configured to, when detecting a control interface combination instruction inputted by a user, determine a plurality of target smart apparatuses carried in the control interface combination instruction.

The acquiring module 320 is configured to respectively acquire control interface information of the plurality of target smart apparatuses determined by the apparatus determining module 310.

The interface generating module 330 is configured to generate a combined control interface according to the control interface information of the plurality of target smart apparatuses acquired by the acquiring module 320, the combined control interface being configured to control the plurality of target smart apparatuses.

The displaying module 340 is configured to display the combined control interface generated by the interface generating module 330.

Fig. 10 is a block diagram of another interface display device according to an embodiment of the present invention. As shown in Fig. 10, on the basis of the above embodiment shown in Fig. 9, the device in the present embodiment may further include: an output module 350, and an instruction determination module 360.

The output module 350 is configured to output an apparatus list of alternative smart apparatuses which have been bound with the terminal in advance.

The instruction determination module 360 is configured to, when detecting a selection operation of a predetermined key, use the selection operation of the predetermined key as the control interface combination instruction, the predetermined key being a key for a plurality of target smart apparatuses selected by the user from the apparatus list outputted from the output module 350, and the control interface combination instruction designating apparatus identities of the plurality of target smart apparatuses.

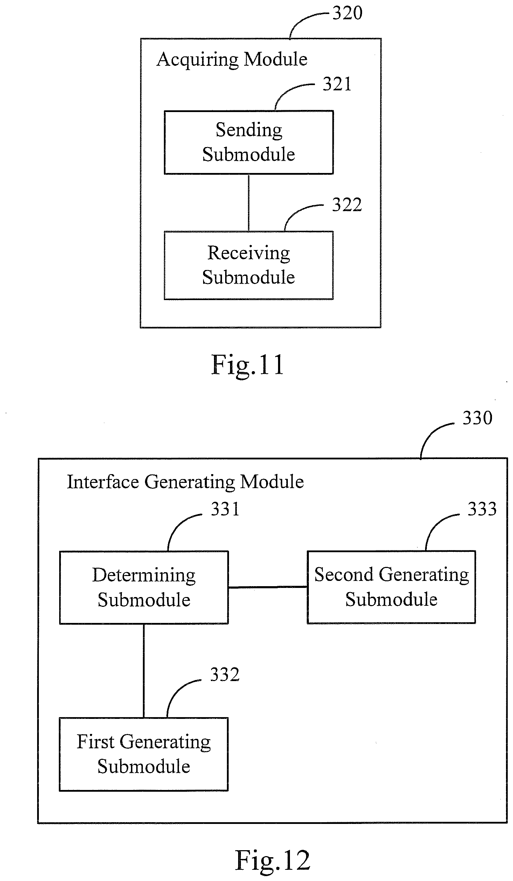

Fig. 11 is a block diagram of yet another interface display device according to an embodiment of the present invention. As shown in Fig. 11, on the basis of the above embodiment shown in Fig. 9, the acquiring module 320 includes: a sending submodule 321, and a receiving submodule 322.

The sending submodule 321 is configured to send a control interface information acquiring request to a preset server, the control interface information acquiring request carrying apparatus identities of the plurality of target smart apparatuses determined by the apparatus determining module 310, thereby the server acquires the control interface information of the plurality of target smart apparatuses respectively according to the apparatus identities after receiving the control interface information acquiring request.

The receiving submodule 322 is configured to receive the control interface information of the plurality of target smart apparatuses returned by the preset server.

Alternatively, the control interface information acquired by the acquiring module 320 includes all button control information and demonstration control information on control interfaces corresponding to the plurality of target smart apparatuses.

Fig. 12 is a block diagram of still another interface display device according to an embodiment of the present invention. As shown in Fig. 12, on the basis of the above embodiments shown in any of Figs. 9-11, the interface generating module 330 includes: a determining submodule 331, a first generating submodule 332, and a second generating submodule 333.

The determining submodule 331 is configured to determine target control interface information of the combined control interface according to the control interface information of the plurality of target smart apparatuses acquired by the acquiring module 320.

The first generating submodule 332 is configured to generate a combined control button in the combined control interface according to target button control information in the target control interface information determined by the determining submodule 331.

The second generating submodule 333 is configured to generate a combination demonstration control in the combined control interface according to target demonstration control information in the target control interface information determined by the determining submodule 331.

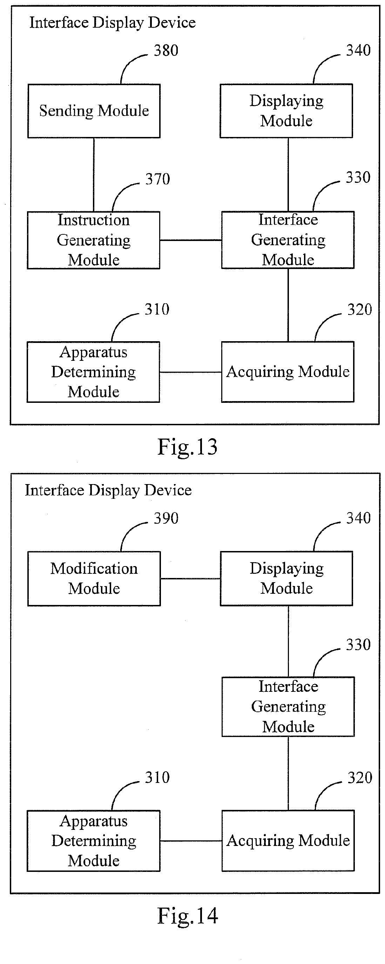

Fig. 13 is a block diagram of still another interface display device according to an embodiment of the present invention. As shown in Fig. 13, on the basis of the above embodiment shown in Fig. 12, the device further includes: an instruction generating module 370, and a sending module 380.

The instruction generating module 370 is configured to, when detecting that a combined control button generated by the first generating submodule 332 is selected, generate an operation instruction corresponding to the combination control button.

The sending module 380 is configured to send the operation instruction generated by the instruction generating module to a preset server, such that the preset server forwards the operation instruction to the plurality of target smart apparatuses to make the plurality of target smart apparatuses perform a corresponding operation according to the operation instruction.

Fig. 14 is a block diagram of yet another interface display device according to an embodiment of the present invention. As shown in Fig. 14, on the basis of the above embodiment shown in Fig. 9, the device further includes: a modification module 390.

The modification module 390 is configured to, when detecting an input operation, modify an interface name of the combined control interface displayed by the displaying module according to content of the input operation.

With respect to the devices in the above embodiments, the specific manners for performing operations by individual modules therein have been described in detail in the embodiments regarding the methods, and so they will not be elaborated further herein.

For device embodiments, since they are substantially corresponding to the method embodiments, the relevant contents may be obtained by referring to the explanations in the method embodiments. The above-described device embodiments are only illustrative. The units illustrated as separate components may be or may not be separated physically, the components shown as a unit may be or may not be a physical unit, i.e., may be located at one location, or may be distributed into multiple network units. A part or all of the modules may be selected to achieve the purpose of the solution in the present invention according to actual requirements. The person skilled in the art can understand and implement the present invention without inventive labor.

In addition, the present invention further provides an interface display device applied in a terminal, including:
a processor; and
a memory for storing instructions executable by the processor;
wherein the processor is configured to:
   when detecting a control interface combination instruction inputted by a user, determine a plurality of target smart apparatuses designated by the control interface combination instruction;
   acquire control interface information of the plurality of target smart apparatuses respectively;
   generate a combined control interface according to the control interface information of the plurality of target smart apparatuses, the combined control interface being configured to control the plurality of target smart apparatuses; and
   display the combined control interface.

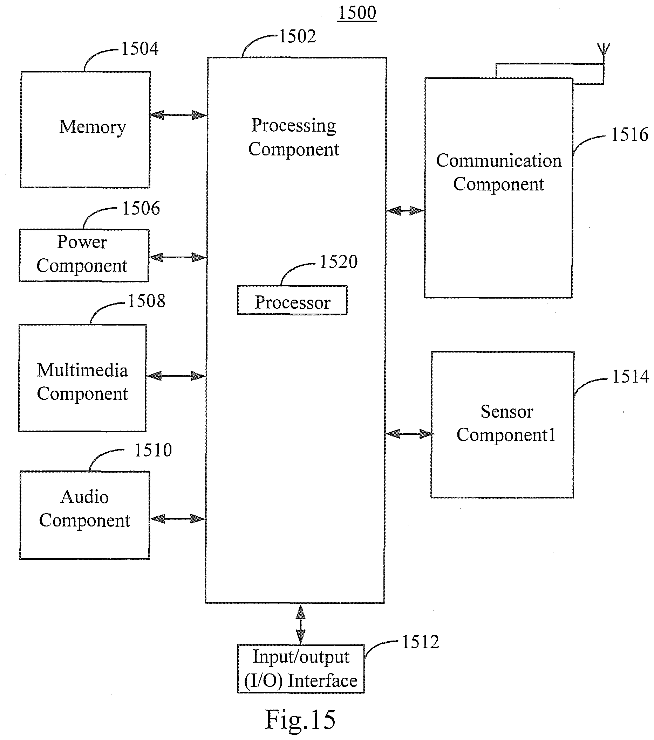

Fig. 15 is a structural block diagram of an interface display device 1500 according to an embodiment of the present invention. As shown in Fig. 15, for example, the device 1500 may include a terminal, and the terminal may be a mobile phone, a computer, a digital broadcast terminal, a messaging device, a smart plug, a smart blood pressure meter, a gaming console, a tablet, a medical device, exercise equipment, a personal digital assistant, a smart wristband, a smart watch and the like.

Referring to Fig. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel may include one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and the rear camera may receive an external multimedia datum while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 may include a microphone ("MIC") configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the device 1500 and other devices. The device 1500 can access a wireless network based on a communication standard, such as WiFi, 2G, or 3G, or a combination thereof. In one embodiment, the communication component 1516 receives a broadcast signal or broadcast associated information from an external broadcast management system via a broadcast channel. In one embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments, the device 1500 may be implemented using one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In certain embodiments, there is also provided a non-transitory computer-readable storage medium including instructions, such as included in the memory 1504, executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

## Claims

1. An interface display method applied in a terminal, comprising:
detecting an instruction that is input by a user;
detecting that the instruction input by the user is a control interface combination instruction instructing generation of a combined control interface for controlling a plurality of target smart apparatuses, the identities of the target smart apparatuses being carried by the control interface combination instruction;
determining (103) the plurality of target smart apparatuses identified in the control interface combination instruction;
responsive to the control interface combination instruction input by the user, acquiring (104) control interface information of the plurality of target smart apparatuses respectively, wherein the control interface information comprises all button control information on control interfaces corresponding to the plurality of target smart apparatuses;
generating (105) a combined control interface according to the control interface information of the plurality of target smart apparatuses, the combined control interface being configured to control the plurality of target smart apparatuses; and
displaying (106, 209) the combined control interface;
wherein the generating (105) of the combined control interface according to the control interface information of the plurality of target smart apparatuses comprises:
determining (105-1, 206), from the acquired control interface information of the plurality of target smart apparatuses, controls that the target smart apparatuses have in common, and defining button control information of said common controls as target control interface information of the combined control interface;
generating (105-2, 207), for a control common to said plurality target smart apparatuses, a combined control button in the combined control interface according to said button control information in the target control interface information; and
after displaying (106, 209) the combined control interface, the method further comprises: when detecting that the combined control button is selected, generating (107, 210) an operation instruction corresponding to the combined control button; and sending (108, 211) the operation instruction to a preset server, such that the preset server forwards the operation instruction to the plurality of target smart apparatuses to make the plurality of target smart apparatuses perform a corresponding operation according to the operation instruction.

2. The method of claim 1, wherein before determining (103) the plurality of target smart apparatuses carried in the control interface combination instruction when the control interface combination instruction inputted by the user is detected, the method further comprises:
outputting (101, 201) an apparatus list of different smart apparatuses which have been bound with the terminal in advance; and
when a selection operation to a predetermined key is detected, using (102, 202) the selection operation to the predetermined key as the control interface combination instruction, the predetermined key being a key for a plurality of target smart apparatuses selected by the user from the apparatus list.

3. The method of claim 1, wherein the acquiring (104) the control interface information of the plurality of target smart apparatuses respectively comprises:
sending (104-1, 204) a control interface information acquiring request to a preset server, the control interface information acquiring request carrying apparatus identities of the plurality of target smart apparatuses, such that the preset server acquires the control interface information of the plurality of target smart apparatuses respectively according to the apparatus identities after receiving the control interface information acquiring request; and
receiving (104-2, 205) the control interface information of the plurality of target smart apparatuses returned by the preset server.

4. The method of claim 1, wherein after displaying (106, 209) the combined control interface, the method further comprises:
when an input operation is detected, modifying (109, 212) an interface name of the combined control interface according to content of the input operation.

5. An interface display device for a terminal, comprising:
an apparatus determining module (310) configured to, when a control interface combination instruction inputted by a user is detected, determine a plurality of target smart apparatuses carried in the control interface combination instruction;
an acquiring module (320) configured, responsive to the control interface combination instruction input by the user, to respectively acquire control interface information of the plurality of target smart apparatuses determined by the apparatus determining module (310), the control interface information comprising all button control information on control interfaces corresponding to the plurality of target smart apparatuses;
an interface generating module (330) configured to generate a combined control interface according to the control interface information of the plurality of target smart apparatuses acquired by the acquiring module (320), the combined control interface being configured to control the plurality of target smart apparatuses; and
a displaying module (340) configured to display the combined control interface generated by the interface generating module (330);
wherein the interface generating module (330) comprises:
a determining submodule (331) configured to determine, from the acquired control interface information of the plurality of target smart apparatuses acquired by the acquiring module (320), controls that the target smart apparatuses have in common, and to define button control information of said common controls as target control interface information of the combined control interface;
a first generating submodule (332) configured to generate, for a control common to said plurality of target smart apparatuses, a combined control button in the combined control interface according to said button control information in the target control interface information determined by the determining submodule (331); and
the device further comprises:
an instruction generating module (370) configured to, when detecting that the combined control button generated by the first generating submodule (332) is selected, generate an operation instruction corresponding to the combined control button; and
a sending module (380) configured to send the operation instruction generated by the instruction generating module to a preset server, such that the preset server forwards the operation instruction to the plurality of target smart apparatuses to make the plurality of target smart apparatuses perform a corresponding operation according to the operation instruction.

6. The device of claim 5, further comprising:
an output module (350) configured to output an apparatus list of different smart apparatuses which have been bound with the terminal in advance; and
an instruction determining module (360) configured to, when a selection operation to a predetermined key is detected, use the selection operation to the predetermined key as the control interface combination instruction, the predetermined key being a key for a plurality of target smart apparatuses selected by the user from the apparatus list outputted from the output module (350).

7. The device of claim 5, wherein the acquiring module (320) comprises:
a sending submodule (321) configured to send a control interface information acquiring request to a preset server, the control interface information acquiring request carrying apparatus identities of the plurality of target smart apparatuses determined by the apparatus determining module (310), such that the server acquires the control interface information of the plurality of target smart apparatuses respectively according to the apparatus identities after receiving the control interface information acquiring request; and
a receiving submodule (322) configured to receive the control interface information of the plurality of target smart apparatuses returned by the preset server.

8. The device of claim 5, further comprising:
a modification module (390) configured to, when an input operation is detected, modify an interface name of the combined control interface displayed by the displaying module (340) according to content of the input operation.

9. A computer program, which when executing on a processor of a terminal, performs a method according to any one of claims 1 to 4.

## Patentansprüche

1. Schnittstellenanzeigeverfahren, das in einem Endgerät angewendet wird, umfassend:
Erfassen einer Anweisung, die von einem Benutzer eingegeben wird,
Erfassen, dass die Anweisung, die von dem Benutzer eingegeben wird, eine Steuerschnittstellenkombinationsanweisung ist, die eine Erzeugung einer kombinierten Steuerschnittstelle zum Steuern von mehreren Ziel-Smart-Geräte anweist, wobei die Kennungen der Ziel-Smart-Geräte von der Steuerschnittstellenkombinationsanweisung getragen werden,
Bestimmen (103) der mehreren Ziel-Smart-Geräte, die in der Steuerschnittstellenkombinationsanweisung identifiziert werden,
als Reaktion auf die Steuerschnittstellenkombinationsanweisung, die von dem Benutzer eingegeben wird, jeweiliges Beziehen (104) von Steuerschnittstelleninformationen der mehreren Ziel-Smart-Geräte, wobei die Steuerschnittstelleninformationen alle Schaltflächensteuerinformationen zu Steuerschnittstellen umfassen, die den mehreren Ziel-Smart-Geräten entsprechen,
Erzeugen (105) einer kombinierten Steuerschnittstelle gemäß den Steuerschnittstelleninformationen der mehreren Ziel-Smart-Geräte, wobei die kombinierte Steuerschnittstelle dazu ausgestaltet ist, die mehreren Ziel-Smart-Geräte zu steuern, und
Anzeigen (106, 209) der kombinierten Steuerschnittstelle,
wobei das Erzeugen (105) der kombinierten Steuerschnittstelle gemäß den Steuerschnittstelleninformationen der mehreren Ziel-Smart-Geräte umfasst:
Bestimmen (105-1, 206) von Steuerungen, welche die Ziel-Smart-Geräte gemeinsam haben, aus den bezogenen Steuerschnittstelleninformationen der mehreren Ziel-Smart-Geräte, und Definieren von Schaltflächensteuerinformationen der gemeinsamen Steuerungen als Zielsteuerschnittstelleninformationen der kombinierten Steuerschnittstelle,
Erzeugen (105-2, 207) einer kombinierten Steuerschaltfläche für eine Steuerung, welche die mehreren Ziel-Smart-Geräte gemeinsam haben, in der kombinierten Steuerschnittstelle gemäß den Schaltflächensteuerinformationen in den Zielsteuerschnittstelleninformationen, und
wobei das Verfahren nach dem Anzeigen (106, 209) der kombinierten Steuerschnittstelle ferner umfasst:
wenn erfasst wird, dass die kombinierte Steuerschaltfläche ausgewählt wird, Erzeugen (107, 210) einer Operationsanweisung, die der kombinierten Steuerschaltfläche entspricht, und
Senden (108, 211) der Operationsanweisung an einen voreingestellten Server, so dass der voreingestellte Server die Operationsanweisung an die mehreren Ziel-Smart-Geräte weiterleitet, um zu bewirken, dass die mehreren Ziel-Smart-Geräte eine entsprechende Operation gemäß der Operationsanweisung durchführen.

2. Verfahren nach Anspruch 1, wobei das Verfahren vor dem Bestimmen (103) der mehreren Ziel-Smart-Geräte, die in der Steuerschnittstellenkombinationsanweisung getragen werden, wenn die Steuerschnittstellenkombinationsanweisung, die von dem Benutzer eingegeben wird, erfasst wird, ferner umfasst:
Ausgeben (101, 201) einer Geräteliste von unterschiedlichen Smart-Geräten, die im Voraus mit dem Endgerät verknüpft wurden, und
wenn eine Auswahloperation für eine vorher bestimmte Taste erfasst wird, Verwenden (102, 202) der Auswahloperation für die vorher bestimmte Taste als die Steuerschnittstellenkombinationsanweisung, wobei die vorher bestimmte Taste eine Taste für mehrere Ziel-Smart-Geräte ist, die von dem Benutzer aus der Geräteliste ausgewählt werden.

3. Verfahren nach Anspruch 1, wobei das jeweilige Beziehen (104) der Steuerschnittstelleninformationen der mehreren Ziel-Smart-Geräte umfasst:
Senden (104-1, 204) einer Steuerschnittstelleninformation-Bezugsanforderung an einen voreingestellten Server, wobei die Steuerschnittstelleninformation-Bezugsanforderung Gerätekennungen der mehreren Ziel-Smart-Geräte trägt, so dass der voreingestellte Server die Steuerschnittstelleninformationen der mehreren Ziel-Smart-Geräte jeweils gemäß den Gerätekennungen nach dem Empfangen der Steuerschnittstelleninformation-Bezugsanforderung bezieht, und
Empfangen (104-2, 205) der Steuerschnittstelleninformationen der mehreren Ziel-Smart-Geräte, die von dem voreingestellten Server zurückgesendet werden.

4. Verfahren nach Anspruch 1, wobei das Verfahren nach dem Anzeigen (106, 209) der kombinierten Steuerschnittstelle ferner umfasst:
wenn eine eingegebene Operation erfasst wird, Modifizieren (109, 212) eines Schnittstellennamens der kombinierten Steuerschnittstelle gemäß einem Inhalt der eingegebenen Operation.

5. Schnittstellenanzeigevorrichtung für ein Endgerät, umfassend:
ein Gerätebestimmungsmodul (310), das dazu ausgestaltet ist, wenn eine Steuerschnittstellenkombinationsanweisung, die von einem Benutzer eingegeben wird, erfasst wird, mehrere Ziel-Smart-Geräte zu bestimmen, die in der Steuerschnittstellenkombinationsanweisung getragen werden,
ein Bezugsmodul (320), das dazu ausgestaltet ist, als Reaktion auf die Steuerschnittstellenkombinationsanweisung, die von dem Benutzer eingegeben wird, jeweils Steuerschnittstelleninformationen der mehreren Ziel-Smart-Geräte, die von dem Gerätebestimmungsmodul (310) bestimmt werden, zu beziehen, wobei die Steuerschnittstelleninformationen alle Schaltflächensteuerinformationen zu Steuerschnittstellen umfassen, die den mehreren Ziel-Smart-Geräten entsprechen,
ein Schnittstellenerzeugungsmodul (330), das dazu ausgestaltet ist, eine kombinierte Steuerschnittstelle gemäß den Steuerschnittstelleninformationen der mehreren Ziel-Smart-Geräte, die von dem Bezugsmodul (320) bezogen werden, zu erzeugen, wobei die kombinierte Steuerschnittstelle dazu ausgestaltet ist, die mehreren Ziel-Smart-Geräte zu steuern, und
ein Anzeigemodul (340), das dazu ausgestaltet ist, die kombinierte Steuerschnittstelle, die von dem Schnittstellenerzeugungsmodul (330) erzeugt wird, anzuzeigen,
wobei das Schnittstellenerzeugungsmodul (330) umfasst:
ein Bestimmungsteilmodul (331), das dazu ausgestaltet ist, Steuerungen, welche die Ziel-Smart-Geräte gemeinsam haben, aus den bezogenen Steuerschnittstelleninformationen der mehreren Ziel-Smart-Geräte, die von dem Bezugsmodul (320) bezogen werden, zu bestimmen und Schaltflächensteuerinformationen der gemeinsamen Steuerungen als Zielsteuerschnittstelleninformationen der kombinierten Steuerschnittstelle zu definieren,
ein erstes Erzeugungsteilmodul (332), das dazu ausgestaltet ist, für eine Steuerung, welche die Ziel-Smart-Geräte gemeinsam haben, eine kombinierte Steuerschaltfläche in der kombinierten Steuerschnittstelle gemäß den Schaltflächensteuerinformationen in den Zielsteuerschnittstelleninformationen, die von dem Bestimmungsteilmodul (331) bestimmt werden, zu erzeugen, und
wobei die Vorrichtung ferner umfasst:
ein Anweisungserzeugungsmodul (370), das dazu ausgestaltet ist, wenn erfasst wird, dass die kombinierte Steuerschaltfläche, die von dem ersten Erzeugungsteilmodul (332) erzeugt wird, ausgewählt wird, eine Operationsanweisung zu erzeugen, die der kombinierten Steuerschaltfläche entspricht, und
ein Sendemodul (380), das dazu ausgestaltet ist, die Operationsanweisung, die von dem Anweisungserzeugungsmodul erzeugt wird, an einen voreingestellten Server zu senden, so dass der voreingestellte Server die Operationsanweisung an die mehreren Ziel-Smart-Geräte weiterleitet, um zu bewirken, dass die mehreren Ziel-Smart-Geräte eine entsprechende Operation gemäß der Operationsanweisung durchführen.

6. Vorrichtung nach Anspruch 5, ferner umfassend:
ein Ausgabemodul (350), das dazu ausgestaltet ist, eine Geräteliste von unterschiedlichen Smart-Geräten, die im Voraus mit dem Endgerät verknüpft wurden, auszugeben, und
ein Anweisungsbestimmungsmodul (360), das dazu ausgestaltet ist, wenn eine Auswahloperation für eine vorher bestimmte Taste erfasst wird, die Auswahloperation für die vorher bestimmte Taste als die Steuerschnittstellenkombinationsanweisung zu verwenden, wobei die vorher bestimmte Taste eine Taste für mehrere Ziel-Smart-Geräte ist, die von dem Benutzer aus der Geräteliste, die von dem Ausgabemodul (350) ausgegeben wird, ausgewählt werden.

7. Vorrichtung nach Anspruch 5, wobei das Bezugsmodul (320) umfasst:
ein Sendeteilmodul (321), das dazu ausgestaltet ist, eine Steuerschnittstelleninformation-Bezugsanforderung an einen voreingestellten Server zu senden, wobei die Steuerschnittstelleninformation-Bezugsanforderung Gerätekennungen der mehreren Ziel-Smart-Geräte, die von dem Gerätebestimmungsmodul (310) bestimmt werden, trägt, so dass der Server die Steuerschnittstelleninformationen der mehreren Ziel-Smart-Geräte jeweils gemäß den Gerätekennungen nach dem Empfangen der Steuerschnittstelleninformation-Bezugsanforderung bezieht, und
ein Empfangsteilmodul (322), das dazu ausgestaltet ist, die Steuerschnittstelleninformationen der mehreren Ziel-Smart-Geräte zu empfangen, die von dem voreingestellten Server zurückgesendet werden.

8. Vorrichtung nach Anspruch 5, ferner umfassend:
ein Modifizierungsmodul (390), das dazu ausgestaltet ist, wenn eine eingegebene Operation erfasst wird, einen Schnittstellennamen der kombinierten Steuerschnittstelle, die von dem Anzeigemodul (340) angezeigt wird, gemäß einem Inhalt der eingegebenen Operation zu modifizieren.

9. Computerprogramm, das bei Ausführen auf einem Prozessor eines Endgeräts ein Verfahren nach einem der Ansprüche 1 bis 4 durchführt.

## Revendications

1. Procédé d'affichage d'interface mis en oeuvre dans un terminal, comprenant les étapes ci-dessous consistant à :
détecter une instruction qui est saisie par un utilisateur ;
détecter que l'instruction saisie par l'utilisateur est une instruction de combinaison d'interface de commande ordonnant la génération d'une interface de commande combinée pour commander une pluralité d'appareils intelligents cibles, les identités des appareils intelligents cibles étant portées par l'instruction de combinaison d'interface de commande ;
déterminer (103) la pluralité d'appareils intelligents cibles identifiés dans l'instruction de combinaison d'interface de commande ;
en réponse à l'instruction de combinaison d'interface de commande saisie par l'utilisateur, acquérir (104) des informations d'interface de commande de la pluralité d'appareils intelligents cibles, respectivement, dans lequel les informations d'interface de commande comprennent toutes les informations de commande par boutons sur des interfaces de commande correspondant à la pluralité d'appareils intelligents cibles ;
générer (105) une interface de commande combinée selon les informations d'interface de commande de la pluralité d'appareils intelligents cibles, l'interface de commande combinée étant configurée de manière à commander la pluralité d'appareils intelligents cibles ; et
afficher (106, 209) l'interface de commande combinée ;
dans lequel l'étape de génération (105) de l'interface de commande combinée selon les informations d'interface de commande de la pluralité d'appareils intelligents cibles comprend les étapes ci-dessous consistant à :
déterminer (105-1, 206), à partir des informations d'interface de commande acquises de la pluralité d'appareils intelligents cibles, des commandes que les appareils intelligents cibles ont en commun, et définir des informations de commande par boutons desdites commandes en commun, en tant que des informations d'interface de commande cibles de l'interface de commande combinée ;
générer (105-2, 207), pour une commande commune à ladite pluralité d'appareils intelligents cibles, un bouton de commande combiné, dans l'interface de commande combinée, selon lesdites informations de commande par boutons dans les informations d'interface de commande cibles ; et
après l'étape d'affichage (106, 209) de l'interface de commande combinée, le procédé comprend en outre les étapes ci-dessous consistant à :
lorsqu'il a été détecté que le bouton de commande combiné est sélectionné, générer (107, 210) une instruction d'opération correspondant au bouton de commande combiné ; et
envoyer (108, 211) l'instruction d'opération à un serveur prédéfini, de sorte que le serveur prédéfini achemine l'instruction d'opération à la pluralité d'appareils intelligents cibles en vue d'amener la pluralité d'appareils intelligents cibles à mettre en oeuvre une opération correspondante selon l'instruction d'opération.

2. Procédé selon la revendication 1, dans lequel, avant l'étape consistant à déterminer (103) la pluralité d'appareils intelligents cibles portés dans l'instruction de combinaison d'interface de commande lorsque l'instruction de combinaison d'interface de commande saisie par l'utilisateur est détectée, le procédé comprend en outre les étapes ci-dessous consistant à :
fournir en sortie (101, 201) une liste d'appareils de différents appareils intelligents qui ont été liés au terminal à l'avance ; et
lorsqu'une opération de sélection sur une touche prédéterminée est détectée, utiliser (102, 202) l'opération de sélection sur la touche prédéterminée, en tant que l'instruction de combinaison d'interface de commande, la touche prédéterminée étant une touche pour une pluralité d'appareils intelligents cibles sélectionnés par l'utilisateur à partir de la liste d'appareils.

3. Procédé selon la revendication 1, dans lequel l'étape d'acquisition (104) des informations d'interface de commande de la pluralité d'appareils intelligents cibles comprend respectivement les étapes ci-dessous consistant à :
envoyer (104-1, 204) une demande d'acquisition d'informations d'interface de commande à un serveur prédéfini, la demande d'acquisition d'informations d'interface de commande portant des identités d'appareils de la pluralité d'appareils intelligents cibles, de sorte que le serveur prédéfini acquiert les informations d'interface de commande de la pluralité d'appareils intelligents cibles, respectivement, selon les identités d'appareils, suite à la réception de la demande d'acquisition d'informations d'interface de commande ; et
recevoir (104-2, 205) les informations d'interface de commande de la pluralité d'appareils intelligents cibles renvoyées par le serveur prédéfini.

4. Procédé selon la revendication 1, dans lequel, après l'étape consistant à afficher (106, 209) l'interface de commande combinée, le procédé comprend en outre l'étape ci-dessous consistant à :
lorsqu'une opération de saisie est détectée, modifier (109, 212) un nom d'interface de l'interface de commande combinée selon le contenu de l'opération de saisie.

5. Dispositif d'affichage d'interface pour un terminal, comprenant :
un module de détermination d'appareils (310) configuré de manière à, lorsqu'une instruction de combinaison d'interface de commande saisie par un utilisateur est détectée, déterminer une pluralité d'appareils intelligents cibles portés dans l'instruction de combinaison d'interface de commande ;
un module d'acquisition (320) configuré de manière à, en réponse à l'instruction de combinaison d'interface de commande saisie par l'utilisateur, acquérir respectivement des informations d'interface de commande de la pluralité d'appareils intelligents cibles déterminés par le module de détermination d'appareils (310), les informations d'interface de commande comprenant toutes les informations de commande par boutons sur des interfaces de commande correspondant à la pluralité d'appareils intelligents cibles ;
un module de génération d'interface (330) configuré de manière à générer une interface de commande combinée selon les informations d'interface de commande de la pluralité d'appareils intelligents cibles acquis par le module d'acquisition (320), l'interface de commande combinée étant configurée de manière à commander la pluralité d'appareils intelligents cibles ; et
un module d'affichage (340) configuré de manière à afficher l'interface de commande combinée générée par le module de génération d'interface (330) ;
dans lequel le module de génération d'interface (330) comprend :
un sous-module de détermination (331) configuré de manière à déterminer, à partir des informations d'interface de commande acquises de la pluralité d'appareils intelligents cibles acquis par le module d'acquisition (320), des commandes que les appareils intelligents cibles ont en commun, et à définir des informations de commande par boutons desdites commandes en commun, en tant que des informations d'interface de commande cibles de l'interface de commande combinée ;
un premier sous-module de génération (332) configuré de manière à générer, pour une commande commune à ladite pluralité d'appareils intelligents cibles, un bouton de commande combiné dans l'interface de commande combinée, selon lesdites informations de commande par boutons dans les informations d'interface de commande cibles déterminées par le sous-module de détermination (331) ; et
dans lequel le dispositif comprend en outre :
un module de génération d'instructions (370) configuré de manière à, lorsqu'il est détecté que le bouton de commande combiné généré par le premier sous-module de génération (332) est sélectionné, générer une instruction d'opération correspondant au bouton de commande combiné ; et
un module d'envoi (380) configuré de manière à envoyer l'instruction d'opération générée par le module de génération d'instructions, à un serveur prédéfini, de sorte que le serveur prédéfini achemine l'instruction d'opération à la pluralité d'appareils intelligents cibles, en vue d'amener la pluralité d'appareils intelligents cibles à mettre en oeuvre une opération correspondante selon l'instruction d'opération.

6. Dispositif selon la revendication 5, comprenant en outre :
un module de fourniture en sortie (350) configuré de manière à fournir en sortie une liste d'appareils de différents appareils intelligents qui ont été liés au terminal à l'avance ; et
un module de détermination d'instructions (360) configuré de manière à, lorsqu'une opération de sélection d'une touche prédéterminée est détectée, utiliser l'opération de sélection de la touche prédéterminée, en tant que l'instruction de combinaison d'interface de commande, la touche prédéterminée étant une touche pour une pluralité d'appareils intelligents cibles sélectionnés par l'utilisateur dans la liste d'appareils fournie par le module de fourniture en sortie (350).

7. Dispositif selon la revendication 5, dans lequel le module d'acquisition (320) comprend :
un sous-module d'envoi (321) configuré de manière à envoyer une demande d'acquisition d'informations d'interface de commande, à un serveur prédéfini, la demande d'acquisition d'informations d'interface de commande portant des identités d'appareils de la pluralité d'appareils intelligents cibles déterminés par le module de détermination d'appareils (310), de sorte que le serveur acquiert les informations d'interface de commande de la pluralité d'appareils intelligents cibles, respectivement, selon les identités d'appareils, suite à la réception de la demande d'acquisition d'informations d'interface de commande ; et
un sous-module de réception (322) configuré de manière à recevoir les informations d'interface de commande de la pluralité d'appareils intelligents cibles renvoyées par le serveur prédéfini.

8. Dispositif selon la revendication 5, comprenant en outre :
un module de modification (390) configuré de manière à, lorsqu'une opération de saisie est détectée, modifier un nom d'interface de l'interface de commande combinée affichée par le module d'affichage (340), selon le contenu de l'opération de saisie.

9. Programme informatique qui, lorsqu'il est exécuté sur un processeur d'un terminal, met en oeuvre un procédé selon l'une quelconque des revendications 1 à 4.
